# FASCICULE DE BREVET EUROPEEN

(11) **EP 1 977 096 B1**
(45) Date de publication et mention de la délivrance du brevet: **04.05.2011**
(21) Numéro de dépôt: 07731492.0
(22) Date de dépôt: 10.01.2007
(51) Int. Cl.: F02B 39/14, F01M 1/16

(54) **DISPOSITIF PERMETTANT D'ACCELERER LA MONTEE EN TEMPERATURE D'HUILE DE LUBRIFICATION D'UN MOTEUR A COMBUSTION INTERNE A TURBOCOMPRESSEUR A GAZ D'ECHAPPEMENT**
VORRICHTUNG ZUR BESCHLEUNINGUNG DER ERHÖHUNG DER SCHMIERÖLTEMPERATUR EINES VERBRENNUNGSMOTORS MIT EINEM ABGAS-TURBOLADER
DEVICE FOR ACCELERATING THE INCREASE IN THE LUBRICATING OIL TEMPERATURE OF AN INTERNAL COMBUSTION ENGINE COMPRISING AN EXHAUST-GAS TURBOCHARGER

(30) Priorité: 26.01.2006 FR 0650277
(43) Date de publication de la demande: 08.10.2008
(73) Titulaire: PEUGEOT CITROËN AUTOMOBILES S.A., 78140 Vélizy Villacoublay (FR)
(72) Inventeur: NOIRET, Christian, F-78230 Le Pecq (FR)
(74) Mandataire: Ménès, Catherine
(86) Numéro de dépôt international: PCT/FR2007/050636
(87) Numéro de publication internationale: WO 2007/085752

(56) Documents cités:
- EP-A- 0 426 884
- EP-A- 0 501 018
- DE-A- 3 923 239
- FR-A- 2 704 275
- GB-A- 2 133 481
- JP-A- 57 124 029

## Description

La présente invention revendique la priorité de la demande française 0650277 déposée le 26/01/2006 dont tout le contenu est incorporé ici par référence.

La présente invention concerne un dispositif permettant d'accélérer la montée en température de l'huile de lubrification d'un moteur à combustion interne pourvu d'un turbocompresseur à gaz d'échappement.

Les contraintes de l'environnement, en particulier les gaz à effet de serre, imposent aux constructeurs d'automobiles de réduire les émissions de CO2.

L'une des solutions pour réduire les émissions de CO2 consiste à augmenter le rendement des moteurs à combustion interne de véhicules automobiles en réduisant les pertes mécaniques par frottement des différentes pièces du moteur en particulier lors du démarrage à froid de ce moteur. En effet, lors du démarrage à froid du moteur, les pertes mécaniques sont importantes à cause de la viscosité élevée de l'huile de lubrification.

Les constructeurs d'automobiles travaillent actuellement sur des solutions dites de "gestion thermique" permettant par différents dispositifs d'accélérer la montée en température de l'eau et/ou de l'huile de lubrification afin de réduire au plus vite les pertes par frottement. Parmi ces solutions existantes ou à venir, on peut citer la pompe à eau électrique permettant de piloter le débit d'eau dans le moteur thermique, le refroidissement divisé ou "Split Cooling", qui consiste à séparer les débits d'eau du bas moteur et de la culasse de celui-ci afin de favoriser la montée en température, etc...

La demande de brevet japonais JP 57124029 au nom d'Hitachi Ltd décrit un contrôleur d'huile de lubrification pour un turbocompresseur à gaz d'échappement d'un moteur à combustion interne et qui comprend un circuit de réchauffage pour les démarrages à froid du moteur. Selon cette demande, un circuit complexe de type serpentin est utilisé pour réchauffer l'huile au niveau du palier du turbo - et par conséquent, en réduire la viscosité pour minimiser les pertes du turbo et améliorer son temps de réponse.

La présente invention a pour but d'éliminer les inconvénients ci-dessus du circuit de réchauffage de la demande de brevet japonais en proposant un dispositif permettant d'accélérer la montée en température de l'huile de lubrification d'un moteur à combustion interne pourvu d'un turbocompresseur à gaz d'échappement, et qui soit non seulement efficace pour favoriser la montée en température de l'huile au démarrage à froid du moteur, mais également ne modifie pas les circulations des différentes fluides circulant dans le turbocompresseur.

A cet effet, le dispositif de l'invention permettant d'accélérer le montée en température de l'huile de lubrification d'un moteur à combustion interne pourvu d'un turbocompresseur à gaz d'échappement, lequel turbocompresseur comprend un passage d'entrée et un passage de sortie d'huile sous pression pour la lubrification des paliers de l'axe de la turbine du turbocompresseur, est caractérisé en ce qu'il comprend un circuit de dérivation à débit contrôlé branché parallèlement aux passages d'entrée et de sortie d'huile sous pression de manière à augmenter le débit de circulation d'huile passant à travers le turbocompresseur tant que la pression de l'huile le traversant et réchauffée par les gaz d'échappement est supérieure à un niveau de pression prédéterminé qui correspond à une pression d'huile de fonctionnement normale du moteur à chaud.

Selon une variante de réalisation, le circuit de dérivation a une section d'écoulement permanente calibrée.

Selon un second mode de réalisation, le circuit de dérivation comprend un clapet taré à une pression supérieure à celle de fonctionnement normal du moteur.

Selon un troisième mode de réalisation, le circuit de dérivation comprend une électrovanne de régulation pilotée à sa position permettant la circulation d'huile dans le circuit de dérivation tant que la valeur dé pression d'huile est supérieure à celle de fonctionnement normal du moteur.

L'électrovanne est également pilotée pendant une durée déterminée à sa position de circulation d'huile dans le circuit de dérivation même lorsque la pression d'huile a atteint sa pression de fonctionnement normal du moteur pour améliorer le réchauffement de l'huile.

En variante, l'électrovanne est pilotée de façon à rajouter un débit d'huile dans le turbocompresseur pour le refroidir suivant les besoins thermique.

Le circuit de dérivation est intégré au corps du turbocompresseur ou est fixé à ce dernier.

L'invention sera mieux comprise, et d'autres buts, caractéristiques, détails et avantages de celle-ci apparaîtront plus clairement dans la description explicative qui va suivre faite en référence aux dessins schématiques annexés donnés uniquement à titre d'exemple illustrant deux modes de réalisation de l'invention et dans lesquels :
- la figure 1 représente un turbocompresseur à gaz d'échappement d'un moteur à combustion interne de véhicule automobile ;
- la figure 2 est une vue en coupe agrandie suivant la ligne II-II de la figure 1 et représentant un mode de réalisation du dispositif de l'invention permettant d'accélérer la montée en température de l'huile de lubrification traversant le turbocompresseur de la figure 1 ;

- la figure 3 est une vue en coupe semblable à celle de la figure 1 et représentant un autre mode de réalisation du dispositif permettant d'accélérer la montée en température de l'huile de lubrification traversant le turbocompresseur de la figure 1 ; et
- la figure 4 est un graphe représentant la montée en température de l'huile de lubrification en fonction du temps.

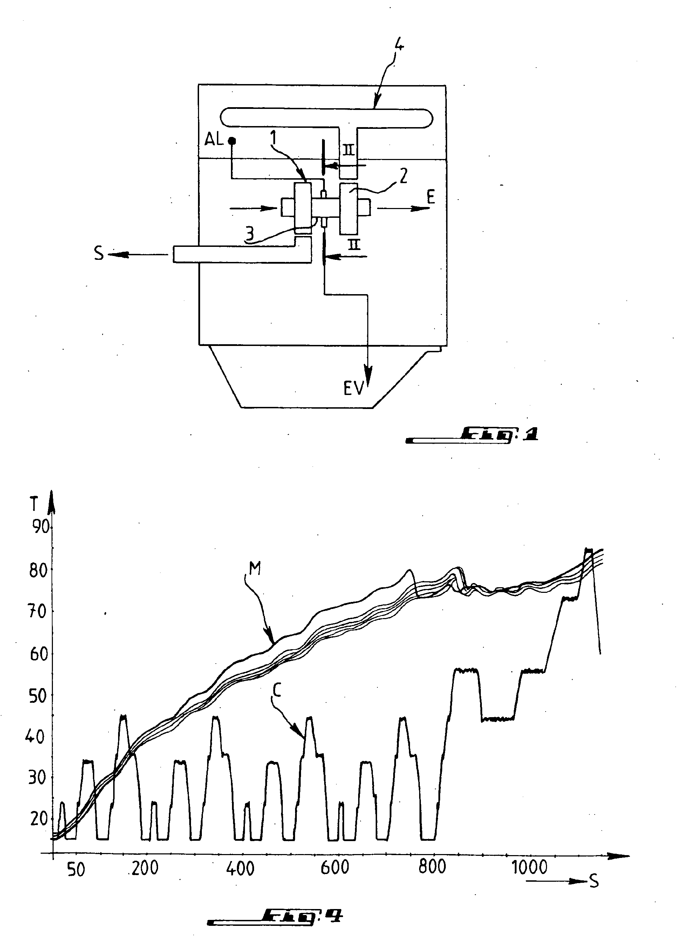

En se reportant tout d'abord à la figure 1, la référence 1 désigne un turbocompresseur représenté schématiquement et dont la turbine 2, ayant son axe monté à rotation dans le corps 3 du turbocompresseur, est entraînée par les gaz d'échappement du moteur 4 représenté schématiquement de manière que l'air entrant dans le turbocompresseur 1 soit comprimé et fourni au moteur, la référence E symbolisant l'échappement des gaz après passage dans le turbocompresseur et S la sortie d'air comprimé vers l'admission du moteur 4.

Le turbocompresseur 1 est alimenté en huile de lubrification sous pression provenant du moteur thermique comme indiqué en AL, cette huile traversant le corps 3 du turbocompresseur 1 pour lubrifier les paliers de l'axe ou arbre de la turbine 2 et étant évacuée du turbocompresseur comme indiqué en EV.

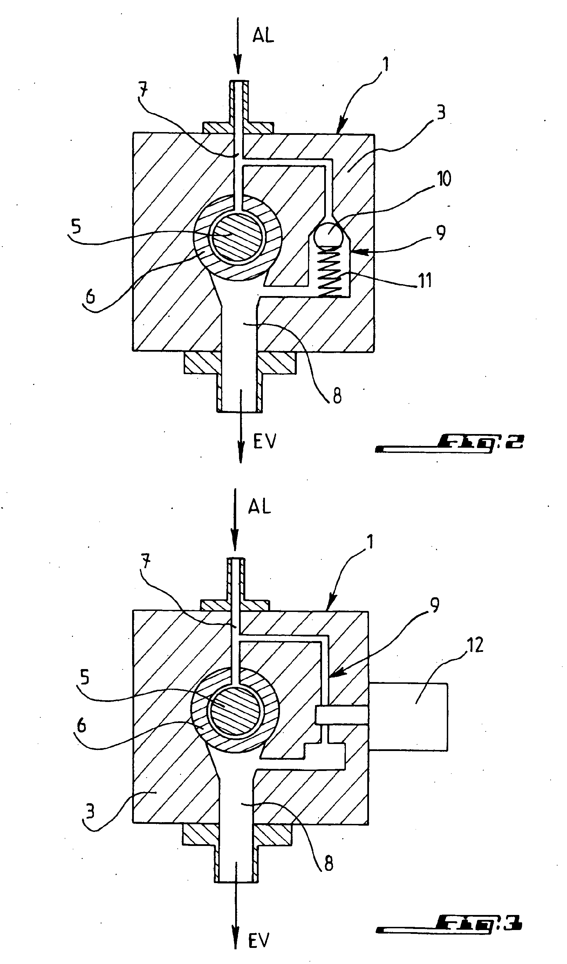

La figure 2 représente en coupe l'arbre 5 de la turbine du turbocompresseur 1 monté à rotation dans le corps 3 de celui-ci par au moins deux paliers 6 dont un seul est représenté.

L'huile de lubrification pénètre dans le turbocompresseur au travers d'un perçage 7 réalisé dans le corps 3 du turbocompresseur 1 et débouchant dans l'espace entre palier 6 et arbre 5 pour lubrification de ceux-ci. L'huile de lubrification traverse le corps 3 pour être évacuée au travers du perçage de sortie 8 du corps 3.

Dans le but d'accélérer la montée en température de l'huile de lubrification du moteur 4 traversant le turbocompresseur 1, il est prévu un circuit de dérivation à débit contrôlé 9 branché parallèlement aux perçages d'entrée 7 et de sortie 8 de l'huile sous pression, de manière à augmenter le débit de circulation d'huile passant à travers le turbocompresseur 1 tant que la pression de l'huile le traversant et réchauffée par les gaz d'échappement est supérieure à un niveau de pression prédéterminé qui correspond à une pression d'huile de fonctionnement normale du moteur à chaud.

La figure 2 représente le mode de réalisation suivant lequel le circuit de dérivation comprend un clapet à bille 10 taré par un ressort hélicoïdal de compression 11 à une pression supérieure à celle de fonctionnement normal du moteur. Bien entendu, d'autres types de clapets pourraient être utilisés. En effet, lorsque la température d'huile est faible et que sa viscosité est importante lors du démarrage à froid du moteur, le clapet de décharge de la pompe à huile n'est pas suffisamment perméable pour réguler la pression d'huile à sa valeur nominale. Il en résulte par conséquent un niveau de pression d'huile dans le moteur important jusqu'à ce que l'huile, en se réchauffant, redevienne suffisamment fluide pour que le clapet de décharge régule effectivement la pression d'huile.

Le circuit de dérivation 9 va donc créer un débit artificiel au niveau du corps 3 du turbocompresseur 1 qui n'existera que lorsque la pression d'huile reste supérieure au tarage du clapet 10 de ce circuit parallèle. Le turbocompresseur 1 étant en contact direct avec les gaz d'échappement, sa montée en température est très rapide de sorte qu'il va réchauffer l'huile du moteur et la présence du circuit parallèle de dérivation 9, par augmentation du débit d'huile au travers du turbocompresseur 1, favorise cette montée en température.

Selon le mode de réalisation représenté en figure 3, le circuit de dérivation 9 comprend une électrovanne de régulation 12 pilotée à sa position d'ouverture du circuit 9 pour permettre la circulation d'huile dans celui-ci tant que la valeur de pression d'huile est supérieure à celle de fonctionnement normal du moteur. L'électrovanne 12 permet de piloter le débit d'huile parallèle au plus près de la pression normale de fonctionnement de ce moteur et par conséquent d'augmenter le débit de dérivation.

En outre, l'électrovanne 12 peut être pilotée de manière que le débit d'huile puisse être dérivé plus longtemps même une fois atteinte la température ou pression de fonctionnement normale du moteur afin d'améliorer le réchauffement de l'huile de lubrification.

Selon la variante avec l'électrovanne 12, il est également possible de piloter celle-ci de façon à rajouter un débit d'huile dans le turbocompresseur 1 permettant de le refroidir dans un mode de fonctionnement autorisé uniquement lorsque les conditions de régime de fonctionnement du moteur et de température d'huile le permettent. En effet, un tel refroidissement du turbocompresseur est nécessaire à puissance importante. Actuellement, la solution au refroidissement du turbocompresseur est le turbocompresseur à eau qui comporte un circuit d'eau pour son refroidissement, d'où une augmentation des coûts comparativement au mode de réalisation du dispositif de la figure 3 permettant le refroidissement efficace du turbocompresseur.

Selon un autre mode de réalisation non représenté, le circuit de dérivation 9 peut avoir une section d'écoulement permanent calibré d'huile. Cette solution est extrêmement simple et fiable bien qu'elle génère un débit et un réchauffage permanent pouvant être préjudiciable à la longue.

Le dispositif de l'invention peut être intégré dans le turbocompresseur ou tout simplement fixé à celui-ci sans modifier la circulation des différents fluides du turbocompresseur comprenant l'huile, l'air et les gaz d'échappement par rapport aux turbocompresseurs existants.

Selon le dispositif dit passif de l'invention à clapet 10 ou calibrage permanent du circuit de dérivation, aucun pilotage électronique n'est exigé. En outre, le dispositif de l'invention est autorégulé.

La figure 4 représente des résultats d'essais du dispositif de l'invention avec un circuit de dérivation parallèle sur le turbocompresseur dont le débit est permanent et simplement piloté par un calibrage. Ce graphe montre que la montée M en température de l'huile avec un débit calibré permanent sur le turbocompresseur est plus rapide que celle de la courbe C d'un turbocompresseur traditionnel sans circuit de dérivation de l'invention.

## Revendications

1. Dispositif permettant d'accélérer la montée en température de l'huile de lubrification d'un moteur à combustion interne (4) pourvu d'un turbocompresseur à gaz d'échappement (1), lequel turbocompresseur (1) comprend un passage d'entrée (7) et un passage de sortie (8) d'huile sous pression pour la lubrification des paliers (6) de l'axe (5) de la turbine (2) du turbocompresseur (1), **caractérisé en ce qu'**il comprend un circuit de dérivation à débit contrôlé (9) branché parallèlement aux passages d'entrée (7) et de sortie (8) d'huile sous pression de manière à augmenter le débit de circulation d'huile passant à travers le turbocompresseur (1) tant que la pression de l'huile le traversant et réchauffée par les gaz d'échappement est supérieure à un niveau de pression prédéterminé qui correspond à une pression d'huile de fonctionnement normal du moteur à chaud.

2. Dispositif selon la revendication 1, **caractérisé en ce que** le circuit de dérivation (9) a une section d'écoulement permanente calibrée.

3. Dispositif selon la revendication 1, **caractérisé en ce que** le circuit de dérivation (9) comprend un clapet (10) taré à une pression supérieure à celle de fonctionnement normal du moteur (4).

4. Dispositif selon la revendication 1, **caractérisé en ce que** le circuit de dérivation (9) comprend une électrovanne de régulation (12) pilotée à sa position permettant la circulation d'huile dans le circuit de dérivation (9) tant que la valeur de pression d'huile est supérieure à celle de fonctionnement normal du moteur (4).

5. Dispositif selon la revendication 4, **caractérisé en ce que** l'électrovanne (12) est également pilotée pendant une durée déterminée à sa position de circulation d'huile dans le circuit de dérivation (9) même lorsque la pression d'huile a atteint sa pression de fonctionnement normal du moteur (4) pour améliorer le réchauffement de l'huile.

6. Dispositif selon la revendication 4 ou 5, **caractérisé en ce que** l'électrovanne (12) est pilotée de façon à rajouter un débit d'huile dans le turbocompresseur (1) pour le refroidir.

7. Dispositif selon l'une des revendications précédentes, **caractérisé en ce que** le circuit de dérivation (9) est intégré au corps (3) du turbocompresseur (1) ou est fixé à ce dernier.

## Claims

1. Device for accelerating the increase in the lubricating oil temperature of an internal combustion engine (4) provided with an exhaust-gas turbocharger (1), which turbocharger (1) comprises an inlet passage (7) and an outlet passage (8) for oil under pressure for lubricating the bearings (6) of the axis (5) of the turbine (2) of the turbocharger (1), **characterized in that** it comprises a controlled-flow branch circuit (9) which is connected in parallel to the inlet (7) and outlet (8) passages for the oil under pressure so as to increase the circulation flow of oil passing through the turbocharger (1) while the pressure of the oil passing therethrough and being reheated by the exhaust gases is greater than a predetermined pressure level which corresponds to a normal operating oil pressure when the engine is hot.

2. Device according to Claim 1, **characterized in that** the branch circuit (9) has a permanent calibrated flow section.

3. Device according to Claim 1, **characterized in that** the branch circuit (9) comprises a calibrated valve (10) at a pressure greater than that of the normal operating of the engine (4).

4. Device according to Claim 1, **characterized in that** the branch circuit (9) comprises a guided regulating electro-valve (12) at its position permitting the circulation of oil in the branch circuit (9) while the oil pressure value is greater than that of the normal operating of the engine (4).

5. Device according to Claim 4, **characterized in that** the electro-valve (12) is also guided for a specified duration at its oil circulation position in the branch circuit (9) even when the oil pressure has reached its normal operating pressure of the engine (4) to improve the reheating of the oil.

6. Device according to Claim 4 or 5, **characterized in that** the electro-valve (12) is guided so as to add a flow of oil in the turbocharger (1) to cool it.

7. Device according to one of the preceding claims, **characterized in that** the branch circuit (9) is integrated to the body (3) of the turbocharger (1) or is fixed to the latter.

## Patentansprüche

1. Vorrichtung, die es erlaubt, den Temperaturanstieg des Schmieröls eines Verbrennungsmotors (4), der mit einem Abgasturbolader (1) versehen ist, zu beschleunigen, wobei der Turbolader (1) einen Einlassdurchgang (7) und einen Auslassdurchgang (8) für Öl unter Druck zum Schmieren der Lager (6) der Achse (5) der Turbine (2) des Turboladers (1) aufweist, **dadurch gekennzeichnet, dass** er einen Abzweigkreislauf mit gesteuertem Durchfluss (9) aufweist, der zu dem Einlassdurchgang (7) und zu dem Auslassdurchgang (8) für Öl unter Druck derart parallel angeschlossen ist, dass der Ölzirkulationsdurchfluss, der durch den Turbolader (1) durchgeht, steigt, solange der Druck des Öls, der ihn durchquert und von den Abgasen erhitzt wird, größer ist als ein vorbestimmtes Druckniveau, das einem normalen Ölbetriebsdruck des warmen Motors entspricht.

2. Vorrichtung nach Anspruch 1, **dadurch gekennzeichnet, dass** der Abzweigkreislauf (9) einen kalibrierten ständigen Abflussquerschnitt hat.

3. Vorrichtung nach Anspruch 1, **dadurch gekennzeichnet, dass** der Abzweigkreislauf (9) eine Klappe (10) aufweist, die auf einen Druck tariert ist, der größer ist als der normale Betriebsdruck des Motors (4).

4. Vorrichtung nach Anspruch 1, **dadurch gekennzeichnet, dass** der Abzweigkreislauf (9) ein auf seine Position gesteuertes Regelmagnetventil (12) aufweist, das die Zirkulation von Öl in dem Abzweigkreislauf (9) erlaubt, solange der Öldruckwert größer ist als der des normalen Betriebs des Motors (4).

5. Vorrichtung nach Anspruch 4, **dadurch gekennzeichnet, dass** das Magnetventil (12) auch während einer bestimmten Dauer auf seine Ölzirkulationsposition in dem Abzweigkreislauf (9) gesteuert wird, auch wenn der Öldruck seinen normalen Betriebsdruck des Motors (4) erreicht hat, um das Erhitzen des Öls zu verbessern.

6. Vorrichtung nach Anspruch 4 oder 5, **dadurch gekennzeichnet, dass** das Magnetventil (12) derart gesteuert ist, dass es einen Durchfluss in dem Turbolader (1) hinzufügt, um ihn zu kühlen.

7. Vorrichtung nach einem der vorhergehenden Ansprüche, **dadurch gekennzeichnet, dass** der Abzweigkreislauf (9) in den Körper (3) des Turboladers (1) eingebaut oder an diesem Letzteren befestigt ist.
